# EUROPEAN PATENT APPLICATION

(11) **EP 3 402 082 A1**
(43) Date of publication of application: **14.11.2018**
(21) Application number: 17170929.8
(22) Date of filing: 12.05.2017
(51) Int. Cl.: H04B 3/00, G01S 3/14

(54) **SIGNAL LEVEL INDICATOR CABLE SYSTEM**

(71) Applicant: Vestel Elektronik Sanayi ve Ticaret A.S., 45030 Manisa (TR)
(72) Inventor: SARIARSLAN, Muhammet Kürsat, 45030 Manisa (TR)
(74) Representative: Ascherl, Andreas

(57) **Abstract**

The present invention generally relates to a system for indicating signal strength in a transmitting cable (8). Particularly the invention can provide an estimate of the incoming signal strength by illuminating the cable in various colors. Said cable system comprises a transmitter (9) is required to produce a compromise position to receive appropriate signals, a receiver (6) wherein device can be receive signal by tuning a tuner (4) to an appropriate frequency. A transmitting cable (8) connects the transmitter (9) and the receiver (6) along with a lamp control circuit (7) in between. The transmitting cable (8) is wrapped around with a transparent cover (13) or a different color electroluminescent material to illuminate the transmitting cable (8) based on signal strength received at the receiver (6). The lamp control circuit (7) comprises of a microprocessor unit, which controls either lamps (10) or voltage for the electroluminescent material to display the signal strength in the transmitting cable (8).

## Description

This invention refers to a system for indicating signal level in a transmitting cable that utilizes lamps with illuminating cable cover according to claim 1 and a system for indicating signal level in a transmitting cable that utilizes electroluminescent substance according to claim 8.

### Background of the Invention

The devices like TV sets, Set-top boxes, RF signal recorders often use antenna, tuner and demodulator to receive signals from the broadcast stations.

Prior available anecdotal remedial measures to boost over the air signal strength includes; getting a bigger antenna or mounting the existing antenna higher so it is elevated above as many reception-blocking obstacles as possible or point the antenna directly at the transmitter. Apart from these there are a variety of signal strength meters available which, when connected to the antenna cable, measure the strength of signal across the whole digital TV band.

But these measures do not indicate the signal strength level.

It is known that a cable can be connected with lamps, which light up when the signal passes through the cable. The drawback is that this does not reveal about the signal level in the transmitting cable.

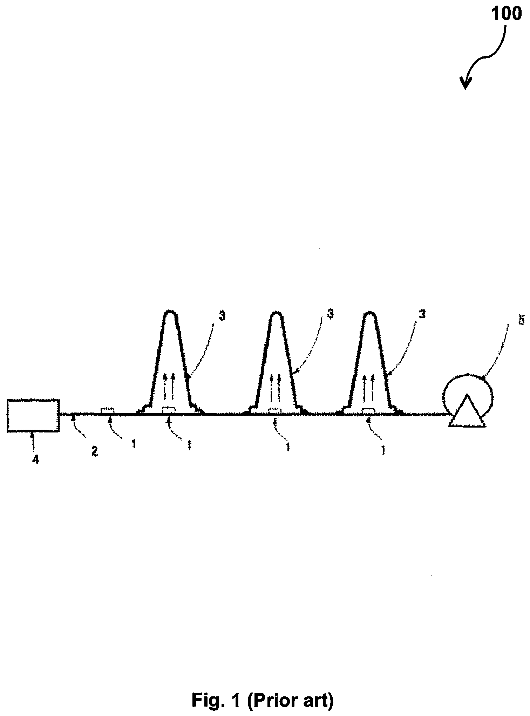

The figure 1 depicts about the signal strength indicating a system according to the prior art. According to the prior art, the LEDs 1 are connected to the transmitting cable 2 which is further connected to the tuner 4. When the cable is electrically energized i.e. when the cable is connected to the transmitter or antenna 5, the lamps light up. However this known system does not indicate the signal level in the cable.

In particular, this system does not provide the signal strength level directly visible to a user at the time of adjusting the transmitter or receiver.

### Object of the Invention

It is therefore the object of the present invention to provide a system, in particular a signal level indicator cable system, and a method that shows the signal strength by veiwing the cable itself to tune the signal accordingly compared to the known devices and methods.

### Description of the Invention

The before mentioned object is solved by a system for indicating a signal level in a transmitting cable according to claim 1. The system for indicating a signal level in the transmitting cable according to the present invention preferably comprises of at least a receiver, at least a tuner, a transmitting cable and a transmitter. The receiver is provided to receive the transmitted signal from the transmitter. The tuner is provided adjusting the frequency of the signal received at the receiver. The signal from the transmitter is transmitted to the receiver through the transmitting cable. The transmitting cable is surrounded by a light propagating transparent cover. The system further may include a lamp control circuit. Further, the lamp control circuit includes a microprocessor unit and a plurality of color lights. The receiver is connected to the transmitting cable through the lamp control circuit. Further, one end of the transmitting cable is connected to the lamp control circuit using a socket which is surrounded by the plurality of color lights. The microprocessor unit configured for turning on the specific color light of the color lights based on the signal strength received at the receiver thereby illuminating the transmitting cable, which is surrounded by the transparent cover.

This solution is beneficial since the cable changes color according to the received signal strength, when the antenna is installed. Best position of the antenna can be determined by just looking at the illuminating color of the cable.

Further preferred embodiments are subject-matter of dependent claims and/or of the following specification parts.

According to a preferred embodiment of the present invention, the color lights may include green color lamp, blue color lamp, yellow color lamp and red color lamp. The glowing of red color lamp may indicate the signal strength is bad. The glowing of green color lamp indicates the signal strength is good. Further, the glowing of yellow and blue color lamp indicates the intermediate position of good and bad signal strength. When a channel is tuned by the tuner, incoming signal strength is detected by the tuner and demodulator circuits. The incoming signal strength information is utilized by the microprocessor unit to control the lamp control circuit.

According to a preferred embodiment of the present invention, the lamp installed directly onto an electronic device to check the signal strength. Further, the lamp control circuit utilizes a PWM signals to control the lamp precisely. In addition to that, the desired color tones obtained using different color lamps that are lit in different intensity level. The transparent cover wrapped around the transmitting cable may include cables such as but is not limited to fiber optic cable or any light propagating cable.

The before mentioned object is also solved by a system for indicating a signal level in a transmitting cable, in particular the system utilizes electroluminescent substance around the transmitting cable, according to claim 8. The system for indicating a signal level in a transmitting cable comprises of, at least a receiver, at least a tuner, a transmitting cable and a transmitter. The receiver is provided to receive the transmitted signal from the transmitter. The tuner is provided adjusting the frequency of the signal received at the receiver. The signal from the transmitter is transmitted to the receiver through the transmitting cable. The transmitting cable is surrounded by a different color electroluminescent substance, which emits light for different voltage levels. The system may further include a lamp control circuit. Further, the lamp control circuit includes a microprocessor unit. The receiver is connected to the transmitting cable through the lamp control circuit. The microprocessor unit can be configured for sending specific voltage to the different color electroluminescent substance that is wrapped around the transmitting cable based on the signal strength received at the receiver thereby illuminating the transmitting cable.

According to a further embodiment of the present invention, the signal strength of the received signal can make the microprocessor unit to adjust the level of voltage that is given to the different color electroluminescent substance thereby to illuminate the transmitting cable with different color combination.

Further benefits, goals and features of the present invention will be described by the following specification of the attached figures, in which components of the invention are exemplarily illustrated. Components of the devices and method according to the inventions, which match at least essentially with respect to their function can be marked with the same reference sign, wherein such components do not have to be marked or described in all figures.

The invention is just exemplarily described with respect to the attached figures in the following.

### Brief Description of the Drawings

- Fig. 1: illustrates a general block diagram of the signal strength indicating system according to the prior art;
- Fig. 2.1: illustrates general block diagram of a system for indicating signal level in a transmitting cable according to the embodiment of the present invention;
- Fig. 2.2: illustrates cross section of socket according to the preferred embodiment of the present invention; and
- Fig. 2.3: illustrates cross section of a transmitting cable covered with electroluminescent substance, according to the further preferred embodiment of the present invention.

### Detailed Description of the Drawings

Figure 1 illustrates a general block diagram 100 of the signal strength indicating system according to the prior art. The detail description is provided in the background.

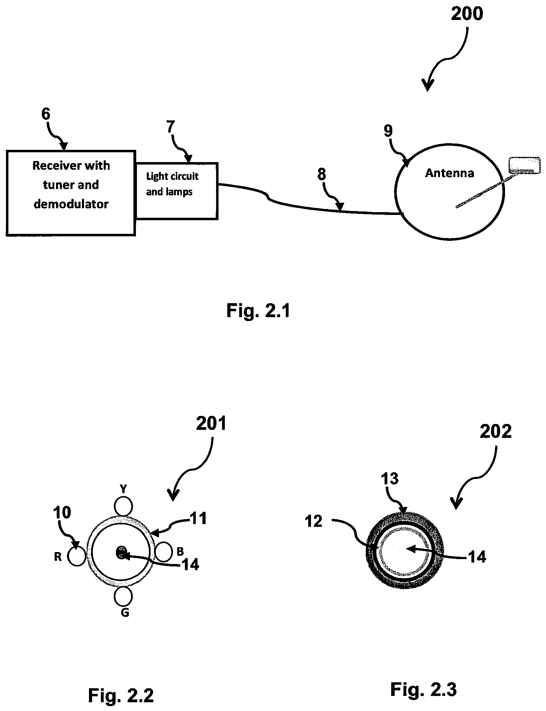

Figure 2.1 illustrates general block diagram 200 of a system for indicating signal level in a transmitting cable 8 according to the embodiment of the present invention. The system for indicating a signal level in the transmitting cable 8 according to the present invention preferably comprises of at least a receiver 6, at least a tuner 4, a transmitting cable 8 and a transmitter 9. The receiver 6 is provided to receive the transmitted signal from the transmitter 9. The tuner 4 is provided adjusting the frequency of the signal received at the receiver 6. The signal from the transmitter 9 is transmitted to the receiver 6 through the transmitting cable 8. The transmitting cable 8 is surrounded by a light propagating transparent cover 13. The system further may include a lamp control circuit 7. Further, the lamp control circuit 7 includes a microprocessor unit and a plurality of color lights. The receiver 6 is connected to the transmitting cable 8 through the lamp control circuit 7. Further, one end of the transmitting cable 8 is connected to the lamp control circuit 7 using a socket 11 which is surrounded by the plurality of color lights. The microprocessor unit configured for turning on the specific color light of the color lights based on the signal strength received at the receiver 6 thereby illuminating the transmitting cable 8 which is surrounded by the transparent cover 13.

The outer surface of the transmitting cable 8 is covered with the transparent cover 13, which illuminates the light that propagates through it, according to the signal strength. This illumination happens in the form of lights of various colors, which corroborates the signal strength.

When the receiver 6 receives the signals through transmitter or antenna 9, it transmits them through the transmitting cable 8 via lamp control circuit 7 to the receiver 6 which can be a set up box or demodulator 6. The lamp control circuit 7 7 produces lights of different colors as per the signal strength which is eventually visible on the outer surface of the specially designed transmitting cable 8 that is the transmitting cable 8 surrounded by the transparent cover 13.

Figure 2.2 illustrates cross section 201 of socket 11 according to the preferred embodiment of the present invention. The figure illustrates the cross section of the socket 11, which is connected to the lamp control circuit 7 and the lamps 10. The lamp control circuit 7 produces lights of different colors as per the signal strength which is eventually visible on the outer surface of the specially designed transmitting cable 8. When the receiver 6 receives the signals through transmitter 9, it transmits them through the transmitting cable 8 via lamp control circuit 7 to the receiver 6 which can be set up box or demodulator.

The color lights may include green color lamps 10, blue color lamps 10, yellow color lamps 10 and red color lamps 10. The red color light, blue color light, green color light, yellow color light are represented by R, B, G and Y respectively in the Figure 2.2. The glowing of red color lamps 10 may indicate the signal strength is bad. The glowing of green color lamps 10 indicates the signal strength is good. Further, the glowing of yellow and blue color lamps 10 indicates the intermediate position of good and bad signal strength. When a channel is tuned by the tuner 4, incoming signal strength is detected by the tuner 4 and demodulator circuits. The incoming signal strength information is utilized by the microprocessor unit to control the lamp control circuit 7. Further, a center pin 14 is located at the center of the socket 11.

According to a preferred embodiment of the present invention, the lamps 10 installed directly onto an electronic device to check the signal strength. Further, the lamp control circuit 7 utilizes a PWM signals to control the lamps 10 precisely. In addition to that, the desired color tones obtained using different color lamps 10 that are lit in different intensity level. The transparent cover 13 wrapped around the transmitting cable 8 may include cables such as but is not limited to fiber optic cable or any light propagating cable.

In particular Figure 2.1 illustrates the cross section of a transmitting cable 8 covered with electroluminescent substance, according to the further preferred embodiment of the present invention. A system for indicating a signal level in a transmitting cable 8, in particular the system utilizes electroluminescent substance around the transmitting cable 8 according to further preferred embodiment. The system for indicating a signal level in a transmitting cable 8 comprises of, at least a receiver 6, at least a tuner 4, a transmitting cable 8 and a transmitter 9. The receiver 6 is provided to receive the transmitted signal from the transmitter 9. The tuner 4 is provided adjusting the frequency of the signal received at the receiver 6. The signal from the transmitter 9 is transmitted to the receiver 6 through the transmitting cable 8. The transmitting cable 8 is surrounded by a different color electroluminescent substance, which emits light for different voltage levels. The system may further include a lamp control circuit 7. Further, the lamp control circuit 7 includes a microprocessor unit. The receiver 6 is connected to the transmitting cable 8 through the lamp control circuit 7. The microprocessor unit can be configured for sending specific voltage to the different color electroluminescent substance that is wrapped around the transmitting cable 8 based on the signal strength received at the receiver 6 thereby illuminating the transmitting cable 8.

The Figure 2.3 illustrates the cross section of the transmitting cable 8. The section contains shield of cable 12 around which there is illuminated cover present 13 and the central pin 14 is located at the center of the transmitting cable 8. The outer surface of the cable is formed from an electroluminescent material (a special kind of material), which illuminates according to the signal strength. This illumination happens in the form of lights of various colors, which corroborates the signal strength.

According to a further embodiment of the present invention, the signal strength of the received signal can make the microprocessor unit to adjust the level of voltage that is given to the different color electroluminescent substance thereby to illuminate the transmitting cable 8 with different color combination.

Thus, the present invention generally relates to a system for indicating signal strength in a transmitting cable 8. Particularly the invention can provide an estimate of the incoming signal strength by illuminating the cable in various colors. Said cable system comprises a transmitter 9 is required to produce a compromise position to receive appropriate signals, a receiver 6 wherein device can be receive signal by tuning a tuner 4 to an appropriate frequency. A transmitting cable 8 connects the transmitter 9 and the receiver 6 along with a lamp control circuit 7 in between. The transmitting cable 8 is wrapped around with a transparent cover 13 or a different color electroluminescent material to illuminate the transmitting cable 8 based on signal strength received at the receiver 6. The lamp control circuit 7 comprises of a microprocessor unit, which controls either lamps 10 or voltage for the electroluminescent material to display the signal strength in the transmitting cable 8.

### List of reference numbers

- 1: LED
- 2: transmitting cable in prior art
- 3: LED Cover
- 4: tuner
- 5: antenna in prior art
- 6: receiver
- 7: lamp control circuit
- 8: transmitting cable
- 9: transmitter or antenna
- 10: lamps
- 11: socket
- 12: shield of cable
- 13: transparent cover or fiber optic cable
- 14: center pin

## Claims

1. A system for indicating a signal level in a transmitting cable comprises of,
at least a receiver (6), at least a tuner (4), a transmitting cable (8) and a transmitter (9);
wherein the receiver (6) is provided to receive the transmitted signal from the transmitter (9);
wherein the tuner (4) is provided adjusting the frequency of the signal received at the receiver (6);
wherein the signal from the transmitter (9) is transmitted to the receiver (6) through the transmitting cable (8);
**characterized in that**
the transmitting cable (8) is surrounded by a light propagating transparent cover (13); wherein the system further includes a lamp control circuit (7); wherein the lamp control circuit (7) includes a microprocessor unit and a plurality of color lights (10); wherein the receiver (6) is connected to the transmitting cable (8) through the lamp control circuit (7);
wherein one end of the transmitting cable (8) is connected to the lamp control circuit (7) using a socket (11) which is surrounded by the plurality of color lights (10); wherein the microprocessor unit configured for turning on the specific color light of the color lights (10) based on the signal strength received at the receiver (6) thereby illuminating the transmitting cable (8) which is surrounded by the transparent cover (13).

2. The system of claim 1, wherein the color lights includes green color lamps (10), blue color lamps (10), yellow color lamps (10) and red color lamps (10).

3. The system of claim 1, wherein the glowing of red color lamps (10) indicates the signal strength is insuffizient or bad; wherein the glowing of green color lamps (10) indicates the signal strength is good; and wherein the glowing of yellow and blue color lamps (10) indicates the intermediate position of good and bad signal strength.

4. The system of claim 1, wherein when a channel is tuned by the tuner (4), incoming signal strength is detected by the tuner (4) and demodulator circuits; and wherein the incoming signal strength information is utilized by the microprocessor unit to control the lamp control circuit (7).

5. The system of claim 1, wherein the lamps (10) are installed directly onto an electronic device to check the signal strength; and wherein the lamp control circuit (7) utilizes a PWM signal to control the lamps (10) precisely.

6. The system of claim 1, wherein desired color tones obtained using different color lamps (10) that are lit in different intensity level.

7. The system of claim 1, wherein the transparent cover (13) wrapped around the transmitting cable (8) includes a fiber optic cable or any light propagating cable.

8. A system for indicating a signal level in a transmitting cable (8) comprises of,
at least a receiver (6), at least a tuner (4), a transmitting cable (8) and a transmitter (9);
wherein the receiver (6) is provided to receive the transmitted signal from the transmitter (9);
wherein the tuner (4) is provided adjusting the frequency of the signal received at the receiver (6);
wherein the signal from the transmitter is transmitted to the receiver (6) through the transmitting cable (8);
**characterized in that**
the transmitting cable (8) is surrounded by a different color electroluminescent substance which emits light for different voltage levels;
wherein the system further includes a lamp control circuit (7); wherein the lamp control circuit (7) includes a microprocessor unit;
wherein the receiver (6) is connected to the transmitting cable (8) through the lamp control circuit (7);
wherein the microprocessor unit is configured for sending specific voltage to the different color electroluminescent substance that is wrapped around the transmitting cable (8) based on the signal strength received at the receiver (6) thereby illuminating the transmitting cable (8).

9. The system of claim 8, wherein the signal strength of the received signal is used so that the microprocessor unit adjusts the level of voltage that is given to the different color electroluminescent substance thereby to illuminate the transmitting cable (8) with different color combination.
